# EUROPÄISCHE PATENTSCHRIFT

(11) **EP 2 228 672 B1**
(45) Veröffentlichungstag und Bekanntmachung des Hinweises auf die Patenterteilung: **28.05.2014**
(21) Anmeldenummer: 10002386.0
(22) Anmeldetag: 08.03.2010
(51) Int. Cl.: G02B 5/30, B42D 15/00, G07D 7/12

(54) **Sicherheitselement mit mehrfarbigem Bild**
Safety element with multicoloured image
Elément de sécurité doté d'une image multicolore

(30) Priorität: 11.03.2009 DE 102009012300
(43) Veröffentlichungstag der Anmeldung: 15.09.2010
(73) Patentinhaber: Giesecke & Devrient GmbH, 81677 München (DE)
(72) Erfinder: Lochbihler, Hans, 80333 München (DE); Dr. Kley, Ernst-Bernhard, 07743 Jena (DE); Petschulat, Jörg, 07749 Jena (DE); Prof. Dr. Pertsch, Thomas, 07629 Hermsdorf (DE); Helgert, Christian, 07743 Jena (DE)

(56) Entgegenhaltungen:
- EP-A2- 1 241 490
- US-A1- 2004 223 156
- US-A1- 2007 217 008
- US-A1- 2007 285 782
- GALE M T ET AL: "ZOD IMAGES: IMBOSSABLE SURFACE-RELIEF STRUCTURES FOR COLOR AND BLACK-AND-WHITE REPRODUCTION" JOURNAL OF APPLIED PHOTOGRAPHIC ENGINEERING, SPRINGFIELD, VA, Bd. 4, Nr. 2, 21. März 1978 (1978-03-21), Seiten 41-47, XP000609670 ISSN: 0098-7298
- BARNESW L ET AL: "Surface plasmon subwavelength optics" NATURE, NATURE PUBLISHING GROUP, LONDON, GB LNKD- DOI:10.1038/NATURE01937, Bd. 424, 14. August 2003 (2003-08-14), Seiten 824-830, XP007901985 ISSN: 0028-0836

## Beschreibung

Die Erfindung betrifft ein Sicherheitselement für Sicherheitspapiere, Wertdokumente und dergleichen, mit einem in unpolarisiertem Licht sichtbaren mehrfarbigen Bild, das aus einer Mehrzahl von Pixelelementen besteht. Die Erfindung betrifft ferner ein Verfahren zum Herstellen eines solchen Sicherheitselements, einen Datenträger mit einem derartigen Sicherheitselement und Verfahren zur Echtheitsprüfung eines Sicherheitselements.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements ausgebildet sein, das nach seiner Herstellung auf ein Wertdokument aufgebracht wird.

Mehrfarbige Bilder werden üblicherweise durch eine Anordnung von Farbpigmenten gebildet. Die Vervielfältigung der Bilder erfolgt dabei standardmäßig durch Druckverfahren. Die Haftung der Farbpigmente kann jedoch bei einigen Arten von Farbdrucken ein Problem darstellen. So ist derzeit ein wesentlicher Nachteil von Polymer-Banknoten gegenüber Papier-Banknoten, dass die Farbe des Druckbilds beim Banknotenumlauf nach einiger Zeit abplatzen kann. Dadurch ist im Wesentlichen die Umlauffähigkeit der Polymer-Banknoten begrenzt. Herkömmliche Druckbilder auf Banknoten können auch vergleichsweise einfach mit Farbkopierergeräten vervielfältigt werden.

Ausgehend davon liegt der Erfindung die Aufgabe zugrunde, ein gattungsgemäßes Sicherheitselement anzugeben, das die Nachteile des Standes der Technik vermeidet. Insbesondere soll das Sicherheitselement visuell attraktive mehrfarbige Bilder mit hoher Fälschungssicherheit verbinden.

Diese Aufgabe wird durch das Sicherheitselement, das Herstellungsverfahren, den Datenträger und die Verfahren zur Echtheitsprüfung der unabhängigen Ansprüche gelöst. Weiterbildungen der Erfindung sind Gegenstand der Unteransprüche.

Nach der Erfindung ist bei einem gattungsgemäßen Sicherheitselement vorgesehen, dass es die Merkmale des Anspruchs 1 aufweist.

Pixelelemente mit derartigen metallischen Drahtgittern bilden lateral strukturierte Subwellenlängengitter, die basierend auf den Effekten der Resonanzanregung bzw. der Oberflächenplasmon-Polaritonanregung in TM-Polarisation bzw. der Resonanzanregung in TE-Polarisation zur Erzeugung von farbigen Bildern eingesetzt werden können, wie nachfolgend genauer erläutert.

Unter die Bezeichnung "metallische Drahtgitter" fallen im Rahmen der Erfindung insbesondere Strukturen mit z-förmigem Metallprofil, die auf drei verschiedenen Höhenstufen beabstandete metallische Abschnitte aufweisen. Auch Metallfilme mit einer Mehrzahl paralleler Schlitze fallen unter den Begriff eines metallischen Drahtgitters. Die Metalldrähte sind in diesem Fall durch die stehengebliebenen Bereiche des Metallfilms gebildet, während die parallelen Schlitze die Zwischenräume der beabstandeten Metalldrähte bilden. In anderen Gestaltungen können die Metalldrähte auch durch mit metallischen Nanopartikeln gefüllte Gräben eines dielektrischen Gitters gebildet sein.

In einer vorteilhaften Erfindungsvariante ist das Gitterprofil der metallischen Drahtgitter innerhalb jedes Pixelelements konstant, so dass jedes Pixelelement in einem gewissen Flächenanteil nur mit einem einzigen Drahtgitter gefüllt ist. Um verschiedenfarbige Pixelelemente zu erzeugen, werden dann je nach gewünschter Farbe verschiedene metallische Drahtgitter verwendet.

In einer anderen, gegenwärtig bevorzugten Erfindungsvariante besteht jedes Pixelelement aus mehreren Unterbereichen, die jeweils in einem bestimmten Flächenanteil ein metallisches Drahtgitter mit einem konstantem Gitterprofil enthalten, das in Durchsicht und/oder Aufsicht eine dem Unterbereich zugeordnete Grundfarbe erzeugt, und bei der der Farbeindruck jedes Pixelelements durch Farbmischung der Grundfarben der Unterbereiche erzeugt ist. Während das Gitterprofil innerhalb der Unterbereiche konstant ist, unterscheiden sich die Gitterprofile der Unterbereiche eines Pixelelements voneinander, um unterschiedliche Grundfarben zu erzeugen.

Dabei ist mit Vorteil eine Anzahl n an verschiedenen Grundfarben vorgesehen, die jeweils einem Unterbereich jedes der Pixelelemente zugeordnet sind, wobei n vorzugsweise zwei, drei oder vier beträgt.

Um eine einfache Herstellung zu gewährleisten, enthalten die Unterbereiche vorzugsweise metallische Drahtgitter mit gleicher Gitterperiode. Die unterschiedliche Farbgebung der Unterbereiche wird bevorzugt dadurch sichergestellt, dass die Unterbereiche metallische Drahtgitter mit unterschiedlicher Profiltiefe enthalten. Falls ein besonders großer Farbraum abgedeckt werden soll, kann zusätzlich ein weiterer Parameter, beispielsweise der Zwischenraum zwischen den metallischen Abschnitten oder die Gitterperiode variiert werden.

Die Gitterperiode der metallischen Drahtgitter liegt mit Vorteil zwischen 200 nm und 700 nm, die Breite der Zwischenräume zwischen den Metalldrähten liegt vorzugsweise zwischen 100 nm und 400 nm, und die Profiltiefe der Metalldrähte liegt bevorzugt zwischen 10 nm und 500 nm. Aufgrund der kleinen Gitterkonstante können die Pixelelemente sehr klein, beispielsweise mit linearen Abmessung zwischen 2 µm und 200 µm ausgebildet werden.

Für die metallischen Drahtgitter werden im Rahmen der Erfindung vorzugsweise die Metalle Aluminium, Gold, Silber, Kupfer, Platin, Palladium und Legierungen dieser Metalle eingesetzt. Darüber hinaus sind auch Metalle wie Chrom, Nickel oder Wolfram, die im Sichtbaren ein höheres Absorptionsverhalten zeigen, und deren Legierungen einsetzbar.

Die erfindungsgemäßen metallischen Drahtgitter können auch in ein Dielektrikum mit Brechungsindex n eingebettet sein, wobei n für die meisten Dielektrika zwischen 1,4 und 1,9 liegt. Die Farberzeugung von derartigen eingebetteten Drahtgittern entspricht im Wesentlichen der Farberzeugung freistehender Drahtgitter, wobei allerdings die charakteristischen Reflexions- bzw. Transmissionseigenschaften aufgrund der Einbettung jeweils um den Faktor n zu größeren Wellenlängen verschoben sind. Solche eingebettete Drahtgitter eignen sich besonders gut für eine kostengünstige Massenproduktion. In einer besonders bevorzugten Ausgestaltung sind die metallischen Drahtgitter zwischen ein dielektrisches Substrat und ein dielektrisches Superstrat eingebettet, wobei sich die Brechungsindizes von Substrat und Superstrat im sichtbaren Spektralbereich um weniger als 0,1 unterscheiden.

Als besonders vorteilhaft wird gegenwärtig der Einsatz metallischer Drahtgitter mit einem z-förmigen Metallprofil angesehen.

Die Gitterstruktur kann weiterhin in eine Anordnung von homogenen Schichten eingebettet sein. Diese Schichten können aus Dielektrika sowie metallischen Schichten bestehen. Die Metallschichten können semitransparent ausgelegt sein. Es kann sich ferner auf der Unterseite eine metallische Spiegelschicht befinden. Durch das Zusammenwirken der Interferenz an den homogenen Schichten mit den Resonanzen der Gitterstruktur kann die Farbgebung verstärkt werden.

Die Erfindung enthält auch ein Verfahren zum Herstellen eines Sicherheitselements entsprechend Anspruch 1.

In einer vorteilhaften Weiterbildung wird
- auf Grundlage eines vorgegebenen mehrfarbigen Bilds ein lateral variierendes Gitterprofil festgelegt, das bei der Betrachtung in Aufsicht und/oder Durchsicht das vorgegebene mehrfarbige Bild erzeugt,
- wird auf einem Substrat eine Gitterstruktur mit lateral konstanter Gitterperiode und lateral konstanter Grabentiefe erzeugt,
- werden die Gräben der Gitterstruktur mit Photolack gefüllt,
- werden die mit Photolack gefüllten Gräben entsprechend des festgelegten Gitterprofils lateral mit unterschiedlicher Intensität belichtet, und
- wird der belichtete Photolack entfernt, um die Gräben der Gitterstruktur entsprechend der Belichtungsintensität freizulegen und eine Reliefstruktur mit einem lateral variierenden Gitterprofil zu erhalten.

Vorzugsweise wird auf eine derart erzeugte Reliefstruktur eine Metallisierung aufgebracht, insbesondere aufgedampft. Alternativ kann auch eine Reliefstruktur in Form des gewünschten lateral variierenden Gitterprofils, das bei der Betrachtung in Aufsicht und/oder Durchsicht das vorgegebene mehrfarbige Bild erzeugt, geprägt werden, beispielsweise unter Verwendung eines entsprechend vorbereiteten Masters. Auch in diesem Fall wird vorzugsweise auf die geprägte Reliefstruktur eine Metallisierung aufgebracht, insbesondere aufgedampft. In beiden Fällen wird die Metallisierung mit Vorteil in einem Aufdampfwinkel Q aufgedampft, der bezogen auf die Oberflächennormale zwischen 0° und 75°, vorzugsweise zwischen 5° und 45° liegt.

Anschließend wird die metallisierte Reliefstruktur mit Vorteil mit einer Lackschicht abgedeckt. Beispielsweise können die nach der Metallisierung verbleibenden Gräben mit einem UV-Lack aufgefüllt und die entstehende Struktur mit einer Deckfolie als Superstrat abgedeckt werden.

Die Belichtung des Photolacks erfolgt vorzugsweise mit einem hochauflösenden Verfahren, beispielsweise mit dem Laserstrahl eines Laserwriters, um eine Ortsauflösung bis herab zum Mikrometerbereich zu erreichen.

Die Erfindung enthält auch einen Datenträger mit einem Sicherheitselement der beschriebenen Art oder mit einem auf die beschriebene Art herstellbaren Sicherheitselement. Der Datenträger ist dabei insbesondere ein Wertdokument, wie zum Beispiel eine Banknote, ein Scheck, eine Aktie, ein Ausweis, eine Eintrittskarte, eine Fahrkarte, eine Urkunde, eine Kreditkarte, eine Scheckkarte oder dergleichen. Die Erfindung kann mit besonderem Vorteil bei Wertdokumenten mit Polymersubstrat, wie etwa Polymer-Banknoten eingesetzt werden, da herkömmliche Druckbilder bei Polymernoten die oben genannten Nachteile aufweisen. Die erfindungsgemäßen mehrfarbigen Bilder sind innerhalb eines Datenträgers mit jedem beliebigen anderen Sicherheitsmerkmal kombinierbar.

Die Erfindung enthält weiter ein Verfahren zur Echtheitsprüfung eines Sicherheitselements mit einem in unpolarisiertem Licht sichtbaren mehrfarbigen Bild, bei dem das Sicherheitselement in unpolarisiertem Licht und in linear polarisiertem Licht betrachtet und jeweils der Farbeindruck des mehrfarbigen Bilds erfasst wird, und bei dem ein unterschiedlicher Farbeindruck in unpolarisiertem Licht und in linear polarisiertem Licht als Zeichen der Echtheit des Sicherheitselements gewertet wird.

Bei einem weiteren Verfahren zur Echtheitsprüfung eines Sicherheitselements mit einem in unpolarisiertem Licht sichtbaren mehrfarbigen Bild, wird das Sicherheitselement nacheinander in linear polarisiertem Licht einer ersten Polarisationsrichtung und einer zweiten, zur ersten Polarisationsrichtung senkrechten Polarisationsrichtung betrachtet, wird jeweils der Farbeindruck des mehrfarbigen Bilds erfasst, und wird ein unterschiedlicher Farbeindruck bei den beiden Polarisationsrichtungen als Zeichen der Echtheit des Sicherheitselements gewertet.

Durch die Winkel- und die Polarisationsabhängigkeit des visuellen Eindrucks können die Farbbilder erfindungsgemäßer Sicherheitselemente mit herkömmlichen Farbkopiergeräten nicht vervielfältigt werden. Eine originalgetreue Fälschung ist zudem sehr aufwendig, da dazu das gesamte lateral variierende Gitterprofil bekannt sein müsste.

Die Farbbilder erfindungsgemäßer Sicherheitselemente können durch Prägen in Kombination mit zusätzlichen Bedampfungsschritten in Großserie hergestellt werden. Sie können auch direkt auf Polymersubstrate aufgebracht werden und erlauben daher die Herstellung von Polymer-Banknoten mit geprägten Druckbildern, die eine höhere Lebensdauer als herkömmliche bedruckte Polymer-Banknoten haben.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

### Es zeigen:

- Fig. 1: eine schematische Darstellung einer Banknote mit einem Durchsichtssicherheitselement und einem aufgeklebten Transferelement,
- Fig. 2: einen Detailausschnitt des mehrfarbigen Bildes des Durchsichtssicherheitselements der Fig. 1,
- Fig. 3: schematisch den grundsätzlichen Aufbau erfindungsgemäßer metallischer Drahtgitter,
- Fig. 4: in der linken bzw. rechten Bildhälfte jeweils einen Querschnitt der in ein Dielektrikum eingebetteten metallischen Drahtgitter der Unterbereiche der Fig. 2, und
- Fig. 5: in einer CIE-xy-Farbtafel den Farbort des transmittierten Lichts für metallische Drahtgitter mit den Parametern der Fig. 4 und mit Profiltiefen zwischen 70 nm und 250 nm.

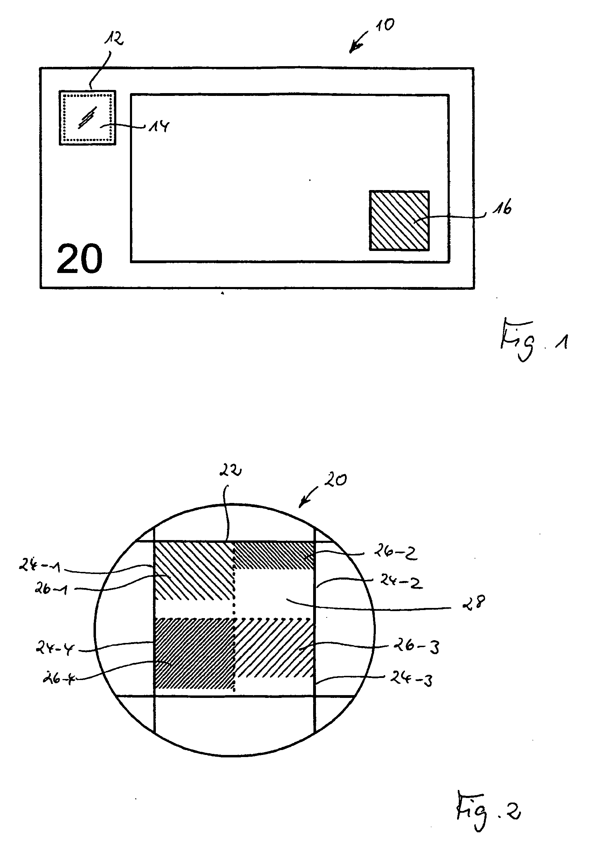

Die Erfindung wird nun am Beispiel von Sicherheitselementen für Banknoten erläutert. Fig. 1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt ein Durchsichtssicherheitselement 12 dar, das über einem Durchsichtsbereich, etwa einem Fensterbereich oder einer durchgehenden Öffnung 14 der Banknote 10 angeordnet ist. Das zweite Sicherheitselement ist auf Betrachtung in Aufsicht (Reflexion) ausgelegt und ist durch ein aufgeklebtes Transferelement 16 beliebiger Form gebildet. Bei der Banknote 10 kann es sich um eine herkömmliche Papier-Banknote mit einem Substrat aus Baumwoll-Velinpapier oder auch um eine Polymer-Banknote oder eine Folien-Verbundbanknote handeln.

Beide Sicherheitselemente 12, 16 zeigen bei gewöhnlichen Beleuchtungsbedingungen, also etwa bei diffusem Kunst- oder Tageslicht jeweils ein mehrfarbiges Bild, das nicht durch eine Anordnung von Farbpigmenten gebildet ist, sondern dessen Farbgebung auf Resonanzanregungen bzw. Oberflächenplasmon-Polaritonanregungen in lateral strukturierten Subwellenlängengittern basiert.

Fig. 2 zeigt zur Illustration einen Detailausschnitt des mehrfarbigen Bildes 20 des Durchsichtssicherheitselements 12. Das mehrfarbige Bild setzt sich aus einer Mehrzahl kleiner Pixelelemente 22 zusammen, die jeweils aus vier Unterbereichen 24-1, 24-2, 24-3, 24-4 bestehen, wobei jedem der Unterbereiche 24-1 bis 24-4 in der weiter unter beschriebenen Weise eine bestimmte Grundfarbe zugeordnet ist.

Zur Darstellung eines gewünschten mehrfarbigen Bildes ist jeder der Unterbereiche 24-1 bis 24-4 eines Pixelelements 22 jeweils in einem bestimmten Flächenanteil mit einem metallischen Drahtgitter 26-1, 26-2, 26-3 bzw. 26-4 gefüllt, das in Durchsicht gerade die diesem Unterbereich zugeordnete Grundfarbe erzeugt. Die verbleibenden Bereiche 28 jedes Unterbereichs sind unstrukturiert und erzeugen keinen Farbeindruck. Diese Bereiche sind zweckmäßig bei einem auf Betrachtung in Transmission ausgelegten Sicherheitselement opak, während sie bei einem Sicherheitselement, das zur Farbgebung in Reflexion genutzt wird, Licht absorbierend ausgelegt sind.

Der Farbeindruck des gesamten Pixelelements 22 ergibt sich dann durch Farbmischung der Grundfarben der Unterbereiche 24-1 bis 24-4, jeweils gewichtet mit dem Flächenanteil, den die metallischen Drahtgitter 26-1 bis 26-4 in dem jeweiligen Unterbereich einnehmen. Dabei enthalten die Unterbereiche 24-1 aller Pixelelemente 22 jeweils die gleiche Art metallischer Drahtgitter 26-1 und unterscheiden sich nur dadurch, dass die Unterbereiche 24-1 in verschiedenen Pixelelementen im Allgemeinen in unterschiedlichen Füllgraden mit den Drahtgittern 26-1 gefüllt sind. Ein Füllgrad von 1 entspricht dabei einem vollständig mit Drahtgittern gefüllten Unterbereich, ein Füllgrad von 0 einem vollständig ungefüllten Unterbereich. Entsprechend kann der Anteil der dem Unterbereich 24-1 zugeordneten Grundfarbe am Farbeindruck eines Pixelelements zwischen 0% (Füllgrad 0) und 100% (Füllgrad 1) liegen. Dasselbe gilt für die weiteren Unterbereiche 24-2 bis 24-4. Das Flächenverhältnis der Unterbereiche zueinander ist dabei variabel, um eine möglichst große Variation in der Farbsättigung zu gewährleisten.

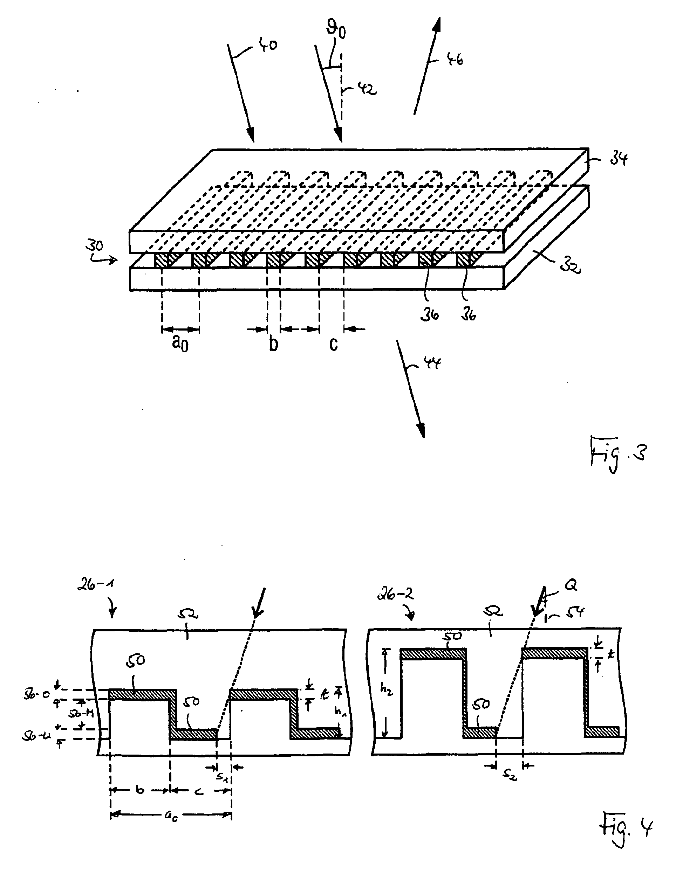

Zur Farberzeugung in Durchsicht enthalten die Unterbereiche 24-1 bis 24-4 der Pixelelemente 22 jeweils metallische Drahtgitter aus einer Mehrzahl paralleler, beabstandet angeordneter Metalldrähte, deren grundsätzlicher Aufbau in Fig. 3 schematisch gezeigt ist.

Das beispielhafte metallische Drahtgitter 30 der Fig. 3 ist zwischen ein dielektrisches Substrat 32 und ein dielektrisches Superstrat 34 mit im Wesentlichen gleichen Brechungsindizes (Δn < 0,1) eingebettet. Es besteht aus einer Mehrzahl paralleler, beabstandet angeordneter Metalldrähte 36 einer Breite b, die aus einem gut leitenden Metall, wie etwa Aluminium gebildet sind. Die Gitterperiode a₀ des Drahtgitters liegt unterhalb von 1 µm, in der Praxis zumeist zwischen 200 nm und 700 nm. Die Breite b der Metalldrähte 36 ist dabei stets kleiner als die Breite c der Zwischenräume zwischen den Metalldrähten 36, mit c = a₀ - b, um sicherzustellen, dass die Resonanz in TE-Polarisation der dominierende Effekt der Farbgebung des Drahtgitters ist.

Fig. 3 zeigt die Beaufschlagung des metallischen Drahtgitters 30 mit Licht 40, dessen zur senkrechten Einfallsrichtung 42 gemessener Einfallswinkel mit θ₀ bezeichnet ist. Die spektrale Antwort des metallischen Drahtgitters 30 in Transmission 44 bzw. Reflexion 46 hängt dabei von der Polarisation des einfallenden Lichts 40 ab. Die Polarisationsrichtung, bei der der E-Vektor von linear polarisiertem Licht parallel zu den Metalldrähten 36 des Drahtgitters ist, wird wie üblich als TE-Polarisation bezeichnet, die dazu senkrechte Polarisationsrichtung als TM-Polarisation. Der allgemeine Fall von unpolarisiertem Licht kann als Überlagerung von Licht dieser beiden fundamentalen Polarisationsrichtungen beschrieben werden.

Die spektrale Antwort der Drahtgitter bei Einfall von TM-polarisiertem Licht ist nach gegenwärtigem Verständnis durch die Anregung von Hohlraumresonanzen zwischen den Drähten, aber auch durch die Anregung von Oberflächenplasmon-Polaritonen in den Metalldrähten 36 beeinflusst. Wie kürzlich vom gegenwärtigen Erfinder erkannt, können jedoch auch beim Einfall von TE-polarisiertem Licht in Transmission und Reflexion Resonanzen auftreten, die eine Färbung von weißem Licht bewirken.

In Ausgestaltungen entsprechend der Erfindung werden metallische Drahtgitter mit z-förmigem Metallprofil eingesetzt. Insbesondere werden in den Unterbereichen 24-1 bis 24-4 der Pixelelemente 22 (Fig. 2) Drahtgitter mit z-förmigem Metallprofil gleicher Gitterkonstante aber unterschiedlicher Profiltiefe verwendet, wie nunmehr mit Bezug auf Fig. 4 beschrieben.

Fig. 4 zeigt in ihrer linken Bildhälfte einen Querschnitt des in ein Dielektrikum 52 eingebetteten metallischen Drahtgitters 26-1 eines der Unterbereiche 24-1 und in ihrer rechten Bildhälfte einen Querschnitt des metallischen Drahtgitters 26-2 des angrenzenden Unterbereichs 24-2. Die Drahtgitter 26-1, 26-2 weisen dieselbe Gitterperiode a₀ und die Stegbreite b auf. Ferner ist die Dicke t des Metallfilms 50 identisch. Jedoch unterscheiden sich die Metalldrähte in der Profiltiefe, ebenso ist die Breite der Schlitze s₁ bzw. s₂ im Metallfilm unterschiedlich. Dadurch erzeugen die Drahtgitter 26-1, 26-2 in Transmission bzw. Reflexion unterschiedliche Grundfarben.

Insgesamt sind die metallischen Drahtgitter 26-1, 26-2 aus einer Mehrzahl paralleler, beabstandet angeordneter Metalldrähte mit einer Gitterperiode von weniger als 1 µm gebildet, die jeweils auf drei verschiedenen Höhenstufen metallische Abschnitte aufweisen. Die oberen Höhenstufen 56-O und unteren Höhenstufen 56-U weisen dabei den Abstand h₁ (linke Bildhälfte) bzw. h₂ (rechte Bildhälfte) auf, die mittlere Höhenstufe 56-M erstreckt sich jeweils zwischen der unteren und der oberen Höhenstufe.

Die Breite der metallischen Abschnitte ist auf jeder Höhenstufe kleiner als die jeweilige Breite der Zwischenräume zwischen den metallischen Abschnitten. Mit der Dicke t des Metallfilms 50 beträgt die Breite der metallischen Abschnitte im Ausführungsbeispiel der Fig. 4 auf der mit 56-0 bezeichneten oberen Höhenstufe b + t*tan(Q), auf der mit 56-U bezeichneten unteren Höhenstufe c - s₁ (linke Bildhälfte) bzw. c - s₂ (rechte Bildhälfte) und auf der mit 56-M bezeichneten mittleren Höhenstufe t*tan(Q). Die Breite der Zwischenräume beträgt auf der mit 56-0 bezeichneten oberen Höhenstufe c - t*tan(Q), auf der mit 56-U bezeichneten unteren Höhenstufe b + s₁ (linke Bildhälfte) bzw. b + s₂ (rechte Bildhälfte) und auf der mit 56-M bezeichneten mittleren Höhenstufe a₀ - t*tan(Q).

Zur Herstellung von z-förmigen Metallprofilen mit lateral variierender Profiltiefe kann von einer Gitterstruktur mit lateral konstanter Gitterperiode und lateral konstanter Grabentiefe ausgegangen werden. Auf eine derartige Gitterstruktur wird zunächst Photolack aufgebracht, so dass die Gräben vollständig gefüllt sind. Das Substrat mit dem aufgebrachten Photolack wird mit Laserstrahlung lateral unterschiedlicher Intensität beaufschlagt und die Gräben werden durch das Entfernen des belichteten Photolacks teilweise freigelegt, so dass eine Reliefstruktur mit einem lateral variierenden Gitterprofil entsteht. Alternativ wird auf diese Weise zunächst ein Prägemaster erzeugt und mit Hilfe dieses Masters eine Reliefstruktur mit dem gewünschten lateral variierenden Gitterprofil geprägt. Bei der Verwendung eines Prägemasters können auch weitere Profilparameter, wie etwa die Gitterperiode oder die Breite der Gräben, lateral unterschiedlich ausgebildet sein.

In beiden Fällen wird auf die erhaltene Reliefstruktur in einem schrägen Aufdampfwinkel Q eine Metallisierung aufgedampft. Durch den schrägen Aufdampfwinkel entsteht ein Drahtgitter mit einem z-förmigen Metallprofil mit lateral variierender Profiltiefe. In der schematischen Darstellung der Fig. 4 ist dabei angenommen, dass die Breite des Metallauftrags in der unteren Ebene durch die geometrische Abschattung beim Bedampfen vorgegeben ist und dass die Dicke t des Metallfilms 50 auf der oberen und unteren Ebene gleich ist.

Im gezeigten Ausführungsbeispiel basieren die metallischen Drahtgitter 26-1, 26-2 auf einem dielektrischen Gitter einer Gitterperiode von a₀ = 330 nm, eine Stegbreite b von 130 nm und einer Grabentiefe von 300 nm. Durch den photolithographischen Prozess zur Erzeugung des lateral variierenden Gitterprofils werden in den Unterbereichen 24-1 Drahtgitter 26-1 mit einer Profiltiefe von h₁ = 90 nm und in den Unterbereichen 24-2 Drahtgitter 26-2 mit einer Profiltiefe von h₂ = 180 nm erzeugt. Die in Fig. 4 nicht dargestellten Drahtgitter 26-3 und 26-4 der Unterbereiche 24-3 und 24-4 werden in gleicher Weise mit eine Profiltiefe von h₃ = 130 nm bzw. von h₄ = 240 nm erzeugt.

Für die Metallisierung wurde im Ausführungsbeispiel Aluminium unter einem Winkel Q = 20°, bezogen auf die Oberflächennormale 54 des Drahtgitters, aufgedampft um auf der oberen und unteren Ebene des dielektrischen Gitters Metallfilme 50 mit einer Dicke von t = 60 nm zu erhalten. Dadurch entstehen metallische Drahtgitter 26-1 bis 26-4, die Metalldrähte mit der in oben erläuterten Struktur enthalten. Da die Breite der metallischen Abschnitte auf der oberen Ebene und auf der unteren Ebene deutlich kleiner ist als der jeweilige Zwischenraum zwischen den metallischen Abschnitten, dominiert die Resonanz in TE-Polarisation die Farbgebung.

Schließlich wurden die Gräben zwischen den Metalldrähten mit UV-Lack gefüllt und die Struktur mit einer Deckfolie als Superstrat abgedeckt, so dass die metallischen Drahtgitter 26-1 bis 26-4 insgesamt in ein Dielektrikum 52 aus Substrat, UV-Lack und Superstrat eingebettet sind. Die Bereiche unterhalb, innerhalb und oberhalb des z-förmigen Metallprofils können dabei im allgemeinen Fall verschiedene Brechungsindizes aufweisen, vorzugsweise ist jedoch der Brechungsindex des Substrats, des Superstrats und des zur Auffüllung der Gräben verwendeten UV-Lacks im Wesentlichen gleich und beträgt typischerweise n = 1,5.

Ein gewünschter Farbeffekt in Transmission oder Reflexion tritt bereits ein, wenn das Gitterprofil über etwa 5 bis 10 Gitterperioden konstant ist. Aufgrund der kleinen Gitterkonstante können die Unterbereiche 24-1 bis 24-4 und damit auch die Pixelelemente 22 daher sehr klein, bis herab zu Abmessungen von wenigen Mikrometern ausgeführt werden.

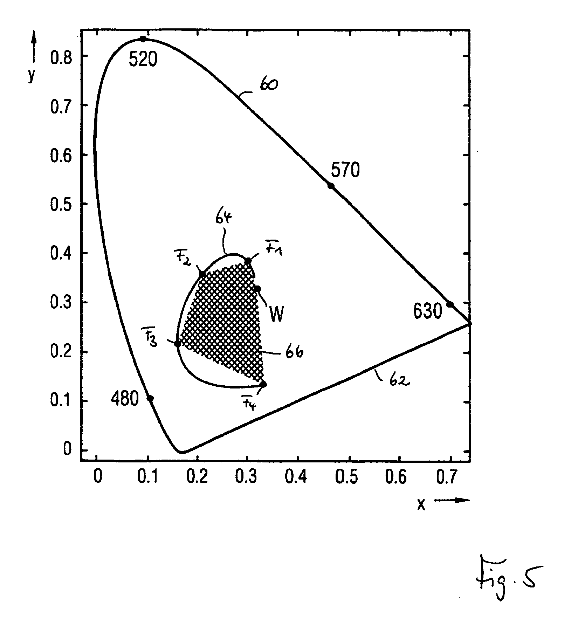

Die Farbmischung und die Erzeugung eines mehrfarbigen Bildes mit Hilfe der metallischen Drahtgitter 26-1 bis 26-4 der Pixelelemente 22 werden nunmehr mit Bezug auf Fig. 5 näher erläutert. Fig. 5 zeigt eine CIE-xy-Farbtafel, in der der Spektralfarbenzug 60, auf dem die Spektralfarben liegen, alle für das menschliche Auge wahrnehmbaren Farbarten einschließt. Zur Orientierung sind auf dem Spektralfarbenzug 60 die Farben Rot bei 630 nm, Gelb bei 570 nm, Grün bei 520 nm und Blau bei 480 nm durch Angabe der jeweiligen Wellenlänge markiert. Geschlossen wird der Spektralfarbenzug 60 durch die Purpurgerade 62. Die Farben auf dem Spektralfarbenzug 60 weisen jeweils maximale Sättigung auf. Bei Annäherung and den Unbuntpunkt oder Weißpunkt W nimmt die Sättigung ab, bis sie am Weißpunkt (x=1/3; y=1/3) vollständig entsättigt sind.

Zur Bestimmung des Farborts des transmittierten Lichts wurde für metallische Drahtgitter mit den Parametern der Fig. 4, also mit einer Gitterperiode a₀ = 330 nm und einer Stegbreite b = 130 nm, sowie für eine Profiltiefe zwischen 70 nm und 250 nm jeweils das Transmissionsspektrum für den sichtbaren Wellenlängenbereich berechnet und mit dem Spektrum der Normlampe D65 und den Empfindlichkeitskurven des menschlichen Auges gefaltet. Die in der Farbtafel eingezeichnete Kurve 64, die grob einen Halbkreis darstellt, zeigt dann für diese metallische Drahtgitter und einfallendes, unpolarisiertes weißes Licht den Farbort des transmittierten Licht an.

Alle innerhalb der Kurve 64 liegenden Farben können durch Farbmischung von auf der Kurve 64 liegenden Grundfarben erhalten werden. Für die Bilderzeugung wurden für die Unterbereiche 24-1 bis 24-4 der Fig. 2 vier metallische Drahtgitter ausgewählt, die einen möglichst großen Teil des innerhalb der Kurve 64 liegenden Bereichs abdecken. Die Grundfarben der ausgewählten metallischen Drahtgitter mit den Profiltiefen 90 nm (Punkt F₁), 130 nm (Punkt F₂), 180 nm (Punkt F₃) und 240 nm (Punkt F₄) sind in Fig. 5 auf der Kurve 64 schematisch eingezeichnet. Durch Farbmischung dieser vier Grundfarben lassen sich dann alle in dem schraffierten Bereich 66 liegenden Farben darstellen. Dabei entsteht durch die Farbmischung der Unterbereiche 24-1 bis 24-4 ein zusätzlicher Freiheitsgrad in der Abdeckung des Farbraums.

Diese gewährleistet gegenüber der direkten Farbdarstellung durch Pixelelemente mit jeweils konstanter Profilierung eine bessere farbliche Wiedergabe mehrfarbiger Bilder.

Wie aus der Lage des Kurve 64 und des schraffierten Bereichs 66 ersichtlich, kann mit der im Ausführungsbeispiel verwendeten Gitterstruktur auch bei Kombination unterschiedlicher Profiltiefen nicht der gesamte Farbraum abgedeckt werden. Insbesondere sind die Farben Rot und Gelb unterrepräsentiert, so dass sich diese Gitterstruktur vor allem zur Darstellung von Bildern mit überwiegend blauen und grünen Bildanteilen eignet.

Soll umgekehrt ein vorgegebenes mehrfarbiges Bild von einem erfindungsgemäßen Sicherheitselement möglichst gut dargestellt werden, so wird das vorgegebene Bild zunächst in Pixel geeigneter Größe unterteilt und die Farborte der Pixel bestimmt. Zur Veranschaulichung können diese Farborte in eine CIE-xy-Farbtafel eingezeichnet werden, wo sie einen bestimmten Farbbereich einnehmen. Dann wird eine Gitterstruktur, möglichst mit konstanter Gitterperiode a₀ und konstanter Stegbreite b ausgewählt, die bei Variation der Profiltiefe den von den Pixeln des mehrfarbigen Bilds eingenommenen Farbbereich möglicht gut überdeckt. Dabei erzeugt die Variation der Profiltiefe bei konstanter Gitterperiode und konstanter Stegbreite im Allgemeinen eine gekrümmte Kurve im Farbraum, wie etwa die in Fig. 5 dargestellte Kurve 64.

Schließlich werden eine Anzahl n an Grundfarben (Punkte auf der Farbort-Kurve der ausgewählten Gitterstruktur) ausgewählt, mit denen ein möglichst großer Teil des von den Pixel der vorgegebenen Bilds eingenommenen Farbbereichs dargestellt werden kann, wie etwa der Teilbereich 66 in Fig. 5. Jede der ausgewählten Grundfarbe entspricht dabei einem bestimmten Parametersatz der zu erzeugenden metallischen Drahtgitter. Vorzugsweise wird nur eine geringe Anzahl an Grundfarben, insbesondere zwei, drei oder vier Grundfarben ausgewählt, um die Herstellung der gesamten, lateral variierenden Gitterstruktur zu vereinfachen.

Zuletzt wird für jedes Pixel des mehrfarbigen Bildes der Anteil der jeweiligen Grundfarbe bestimmt. Mit diesen Angaben kann dann ein lateral variierendes Gitterprofil ermittelt werden, das bei Betrachtung in Durchsicht (in anderen Ausgestaltung auch in Aufsicht) das vorgegebene mehrfarbige Bild erzeugt.

Dazu werden Pixelelemente auf dem Sicherheitselement festgelegt, die den Pixeln des vorgegebenen mehrfarbigen Bildes entsprechen. Jedes Pixelelement wird in n Unterbereiche unterteilt, die jeweils einer der oben genannten Grundfarben zugeordnet sind und die jeweils in einem gewissen Füllgrad mit metallischen Drahtgittern mit den Parametern dieser Grundfarbe gefüllt werden. Für jedes Pixelelement entspricht der Füllgrad dabei gerade dem Anteil der jeweiligen Grundfarbe an der Gesamtfarbe des Pixels. Auf diese Weise ist sichergestellt, dass bei der Betrachtung durch Farbmischung der Grundfarben der Unterbereiche gerade der gewünschte Farbeindruck des Pixelelements entsteht.

Die Drahtgitterstruktur eines erfindungsgemäßen Sicherheitselements beeinflusst als Folge seiner 1-dimensionalen Periodizität nicht nur die Farbe, sondern auch die Polarisation des einfallenden Lichtes. Dadurch zeigt das dargestellte mehrfarbige Bild in unpolarisiertem Licht und in polarisiertem Licht einen unterschiedlichen visuellen Eindruck und erscheint insbesondere in unterschiedlichen Farben. Der leicht erkennbare unterschiedliche Farbeindruck bei Betrachtung des Sicherheitselements in normalem, unpolarisiertem Licht und bei Betrachtung mit einem Polarisationsfilter kann so zur Prüfung der Echtheit des Sicherheitselements genutzt werden.

Das Erscheinungsbild eines erfindungsgemäßen Sicherheitselements verändert sich auch bei der Drehung der Polarisationsebene von einfallendem linear polarisiertem Licht. Ist das einfallende Licht TE-polarisiert, so erscheint das ursprünglich mehrfarbige Bild nur noch einfarbig, da die Farbgebung in TE-Polarisation weitgehend unabhängig von der Profiltiefe der Drahtgitter ist. Die in TE-Polarisation verbleibende Farbe ist dabei im Wesentlichen durch die Breite der Metalldrähte bzw. physikalisch durch die Breite der Zwischenräume zwischen den Metalldrähten bestimmt.

Dagegen ist bei Betrachtung in TM-Polarisation noch ein mehrfarbiges Bild erkennbar, dessen Farben allerdings von dem visuellen Eindruck in unpolarisiertem Licht abweichen und dessen Helligkeit aufgrund der Verluste durch die Oberflächenplasmon-Polaritonanregung reduziert ist. Der unterschiedliche Farbeindruck bei Betrachtung des Sicherheitselements in TE- polarisiertem und TM- polarisiertem Licht kann daher, gegebenenfalls zusätzlich zu einem Vergleich mit dem Farbeindruck in unpolarisiertem Licht, ebenfalls für die Echtheitsprüfung der erfindungsgemäßen Sicherheitselemente eingesetzt werden.

Die Farbbilder erfindungsgemäßer Sicherheitselemente können von herkömmlichen Farbdrucken auch durch Betrachtung bei unterschiedlichen Einfallswinkeln unterschieden werden. Aufgrund des in Fig. 4 illustrierten asymmetrischen Gitterprofils, das durch die schräge Bedampfung erzeugt wird, ist auch das Transmissions- bzw. Reflexionsverhalten der metallischen Drahtgitter asymmetrisch, so dass sich der visuelle Eindruck beim Kippen des Sicherheitselements, anders als bei herkömmlichen Farbdrucken, deutlich verändert.

Während die Ausführungsbeispiele zur Illustration vor allem mit Bezug auf Durchsichtssicherheitselemente beschrieben worden, ist die Erfindung nicht auf in Durchsicht betrachtbare Sicherheitselemente beschränkt, sondern kann auch bei Sicherheitselement eingesetzt werden, die auf Betrachtung in Aufsicht ausgelegt sind. Die beschriebenen Resonanzanregungen bzw. Oberflächenplasmon-Polaritonanregungen in lateral strukturierten Subwellenlängengittern führen auch zu einer Farbgebung des reflektierten Lichts, so dass die oben für das transmittierte Licht gemachten Aussagen analog auch für in Reflexion sichtbare Farbbilder gelten. Vorteilhafterweise befindet sich ein solches farbig reflektierendes Element auf einem lichtabsorbierenden Untergrund. Dadurch erhöht sich der Kontrast der an der Gitterstruktur reflektierten Farbe und wird nicht durch die rückreflektierte Transmission des Gitters beeinflusst.

In einer weiteren vereinfachten Variante werden die auf der Kurve 64 der Fig. 5 zur Verfügung stehenden Farben benutzt, um Farben in den einzelnen Pixeln darzustellen. Hierbei entsteht aufgrund des eingeschränkten Farbraumes ein Falschfarbenbild. Eine farbgetreue Wiedergabe von vorgegebenen Bildern ist bei dieser Variante zwar im Allgemeinen nicht möglich, jedoch weist ein solches Bild aufgrund der kontinuierlich variierenden Profiltiefe des Gitters eine sehr hohe Fälschungssicherheit auf.

Die metallischen Drahtgitter gemäß der vorliegenden Erfindung sind dafür geeignet, farbige Bilder in einer Moiré-Vergrößerungsanordnung darzustellen. Ein Subwellenlängengitter eignet sich hierzu besonders gut, weil auf diese Weise Pixelgrößen im Mikrometerbereich realisiert werden können.

Die Fokussierelemente sind bevorzugt 2-dimensional periodisch angeordnete Mikrolinsen oder 1-dimensional periodische Zylinderlinsen. Bei einer konventionellen Moiré-Anordnung entspricht die Größe des sich periodisch wiederholenden Motivs, das durch das Gitter gebildet wird, in etwa der Einheitszelle des Linsenrasters. Es können jedoch die einzelnen Basisfarben des Bildes auf unterschiedliche, benachbarte Einheitszellen verteilt sein.
Ferner können 3-dimensionale Echtfarbenbilder bei einer Anordnung von Subwellenlängengittern und Lentikularlinsen (Zylinderlinsen) erzeugt werden. Im Design werden zunächst die Bilder von verschiedenen Ansichten eines 3-dimensionalen Objektes in Streifen zerlegt und jeweils in der Einheitszelle der Linse nebeneinander angeordnet. Die unterschiedlichen Farben können dabei, wie oben beschrieben, auf mehrere Einheitszellen verteilt sein. Das farbgebende Subwellenlängengitter beinhaltet letztendlich ein sich periodisch wiederholendes Muster mit lateral unterschiedlicher Modulationstiefe.

## Patentansprüche

1. Sicherheitselement für Sicherheitspapiere, Wertdokumente und dergleichen, mit einem in unpolarisiertem Licht sichtbaren mehrfarbigen Bild, das aus einer Mehrzahl von Pixelelementen besteht, **dadurch gekennzeichnet, dass**
- die Pixelelemente jeweils metallische Drahtgitter enthalten, die in Durchsicht und/oder Aufsicht einen dem Pixelelement zugeordneten Farbeindruck erzeugen, wobei
- die metallischen Drahtgitter aus einer Mehrzahl paralleler, beabstandet angeordneter Metalldrähte mit einer Gitterperiode von weniger als 1 µm gebildet sind, die ein z-förmiges Metallprofil mit auf drei verschiedenen Höhenstufen beabstandeten metallischen Abschnitten aufweisen, wobei eine mittlere Höhenstufe sich jeweils zwischen einer unteren und einer oberen Höhenstufe erstreckt, und wobei die Breite der metallischen Abschnitte auf jeder Höhenstufe kleiner als die jeweilige Breite der Zwischenräume zwischen den metallischen Abschnitten ist.

2. Sicherheitselement nach Anspruch 1, **dadurch gekennzeichnet, dass** das Gitterprofil der metallischen Drahtgitter innerhalb jedes Pixelelements konstant ist.

3. Sicherheitselement nach Anspruch 1, **dadurch gekennzeichnet, dass** jedes Pixelelement aus mehreren Unterbereichen besteht, die jeweils in einem bestimmten Flächenanteil ein metallisches Drahtgitter mit einem konstantem Gitterprofil enthalten, das in Durchsicht und/oder Aufsicht eine dem Unterbereich zugeordnete Grundfarbe erzeugt, und dass der Farbeindruck jedes Pixelelements durch Farbmischung der Grundfarben der Unterbereiche erzeugt ist.

4. Sicherheitselement nach Anspruch 3, **dadurch gekennzeichnet, dass** eine Anzahl n Grundfarben vorgesehen ist, die jeweils einem Unterbereich jedes der Pixelelemente zugeordnet sind, wobei n vorzugsweise zwei, drei oder vier beträgt.

5. Sicherheitselement nach Anspruch 3 oder 4, **dadurch gekennzeichnet, dass** die Unterbereiche metallische Drahtgitter mit gleicher Gitterperiode enthalten.

6. Sicherheitselement nach wenigstens einem der Ansprüche 3 bis 5, **dadurch gekennzeichnet, dass** die Unterbereiche metallische Drahtgitter mit unterschiedlicher Profiltiefe enthalten.

7. Sicherheitselement nach wenigstens einem der Ansprüche 1 bis 6, **dadurch gekennzeichnet, dass** die Gitterperiode der metallischen Drahtgitter zwischen 200 nm und 700 nm liegt, die Breite der Zwischenräume zwischen den Metalldrähten zwischen 100 nm und 400 nm liegt und/oder die Profiltiefe der Metalldrähte zwischen 10 nm und 500 nm liegt.

8. Sicherheitselement nach wenigstens einem der Ansprüche 1 bis 7, **dadurch gekennzeichnet, dass** die metallischen Drahtgitter in ein Dielektrikum eingebettet sind.

9. Sicherheitselement nach Anspruch 8, **dadurch gekennzeichnet, dass** die metallischen Drahtgitter zwischen ein dielektrisches Substrat und ein dielektrisches Superstrat eingebettet sind, wobei sich die Brechungsindizes von Substrat und Superstrat im sichtbaren Spektralbereich um weniger als 0,1 unterscheiden.

10. Verfahren zum Herstellen eines Sicherheitselements nach einem der Ansprüche 1 bis 9, mit einem in unpolarisiertem Licht sichtbaren mehrfarbigen Bild, das aus einer Mehrzahl von Pixelelementen besteht, bei dem
- Pixelelemente mit metallischen Drahtgittern erzeugt werden, die in Durchsicht und/oder Aufsicht einen dem Pixelelement zugeordneten Farbeindruck erzeugen, wobei
- die metallischen Drahtgitter aus einer Mehrzahl paralleler, beabstandet angeordneter Metalldrähte mit einer Gitterperiode von weniger als 1 µm gebildet werden, die ein z-förmiges Metallprofil mit auf drei verschiedenen Höhenstufen beabstandeten metallischen Abschnitten aufweisen, wobei eine mittlere Höhenstufe sich jeweils zwischen einer unteren und einer oberen Höhenstufe erstreckt, und wobei die metallischen Abschnitte auf jeder Höhenstufe mit einer Breite erzeugt werden, die kleiner ist als die jeweilige Breite der Zwischenräume zwischen den metallischen Abschnitten.

11. Verfahren nach Anspruch 10, **dadurch gekennzeichnet, dass**
- auf Grundlage eines vorgegebenen mehrfarbigen Bilds ein lateral variierendes Gitterprofil festgelegt wird, das bei der Betrachtung in Aufsicht und/ oder Durchsicht das vorgegebene mehrfarbige Bild erzeugt,
- auf einem Substrat eine Gitterstruktur mit lateral konstanter Gitterperiode und lateral konstanter Grabentiefe erzeugt wird,
- die Gräben der Gitterstruktur mit Photolack gefüllt werden,
- die mit Photolack gefüllten Gräben entsprechend des festgelegten Gitterprofils lateral mit unterschiedlicher Intensität belichtet werden, und
- der belichtete Photolack entfernt wird, um die Gräben der Gitterstruktur entsprechend der Belichtungsintensität freizulegen und eine Reliefstruktur mit einem lateral variierenden Gitterprofil zu erhalten.

12. Verfahren nach Anspruch 10 oder 11, **dadurch gekennzeichnet, dass** auf eine nach Anspruch 11 erzeugte Reliefstruktur oder auf eine geprägte Reliefstruktur in Form eines lateral variierenden Gitterprofils, das bei der Betrachtung in Aufsicht und/oder Durchsicht das vorgegebene mehrfarbige Bild erzeugt, eine Metallisierung aufgebracht, insbesondere aufgedampft wird.

13. Verfahren nach Anspruch 12, **dadurch gekennzeichnet, dass** die Metallisierung in einem Aufdampfwinkel Q aufgedampft wird, der, bezogen auf die Oberflächennormale, zwischen 0° und 75°, vorzugsweise zwischen 5° und 45° liegt.

14. Verfahren nach Anspruch 12 oder 13, **dadurch gekennzeichnet, dass** die metallisierte Reliefstruktur mit einer Lackschicht abgedeckt wird.

15. Verfahren nach wenigstens einem der Ansprüche 11 bis 14, **dadurch gekennzeichnet, dass** der Photolack mit einem Laserstrahl belichtet wird, um eine Ortsauflösung im Mikrometerbereich zu erreichen.

16. Datenträger mit einem Sicherheitselement nach einem der Ansprüche 1 bis 9, oder mit einem nach einem der Ansprüche 10 bis 15 herstellbaren Sicherheitselement.

17. Datenträger nach Anspruch 16, **dadurch gekennzeichnet, dass** der Datenträger ein Wertdokument, insbesondere eine Banknote ist.

18. Datenträger nach Anspruch 17, **dadurch gekennzeichnet, dass** der Datenträger ein Wertdokument mit einem Polymersubstrat, insbesondere eine Polymer-Banknote ist.

19. Verfahren zur Echtheitsprüfung eines Sicherheitselements nach einem der Ansprüche 1 bis 9 mit einem in unpolarisiertem Licht sichtbaren mehrfarbigen Bild, bei dem das Sicherheitselement in unpolarisiertem Licht und in linear polarisiertem Licht betrachtet und jeweils der Farbeindruck des mehrfarbigen Bilds erfasst wird, und bei dem ein unterschiedlicher Farbeindruck in unpolarisiertem Licht und in linear polarisiertem Licht als Zeichen der Echtheit des Sicherheitselements gewertet wird.

20. Verfahren zur Echtheitsprüfung eines Sicherheitselements nach einem der Ansprüche 1 bis 9 mit einem in unpolarisiertem Licht sichtbaren mehrfarbigen Bild, bei dem das Sicherheitselement nacheinander in linear polarisiertem Licht einer ersten Polarisationsrichtung und einer zweiten, zur ersten Polarisationsrichtung senkrechten Polarisationsrichtung betrachtet und jeweils der Farbeindruck des mehrfarbigen Bilds erfasst wird, und bei dem ein unterschiedlicher Farbeindruck bei den beiden Polarisationsrichtungen als Zeichen der Echtheit des Sicherheitselements gewertet wird.

## Claims

1. A security element for security papers, value documents and the like, having a multi-colored image that is visible in unpolarized light and that consists of a plurality of pixel elements, **characterized in that**
- the pixel elements each include metallic wire lattices that, when looked through and/ or in top view, produce a color impression that is associated with the pixel element,
- the metallic wire lattices being formed from a plurality of parallel metal wires that are arranged spaced apart and that have a lattice period of less than 1 µm and that exhibit a z-shaped metal profile having spaced-apart metallic sections on three different height levels, a middle height level extending in each case between a lower and an upper height level, and the width of the metallic sections on each height level being less than the respective width of the spaces between the metallic sections.

2. The security element according to claim 1, **characterized in that** the lattice profile of the metallic wire lattices is constant within each pixel element.

3. The security element according to claim 1, **characterized in that** each pixel element consists of multiple sub-regions that each include, in a certain areal fraction, a metallic wire lattice having a constant lattice profile that, when looked through and/or in top view, produces a primary color that is associated with the sub-region, and **in that** the color impression of each pixel element is produced by color mixing of the primary colors of the sub-regions.

4. The security element according to claim 3, **characterized in that** a number n of primary colors is provided that are each associated with a sub-region of each of the pixel elements, n preferably being two, three or four.

5. The security element according to claim 3 or 4, **characterized in that** the sub-regions include metallic wire lattices having equal lattice periods.

6. The security element according to at least one of claims 3 to 5, **characterized in that** the sub-regions include metallic wire lattices having different profile depths.

7. The security element according to at least one of claims 1 to 6, **characterized in that** the lattice period of the metallic wire lattices is between 200 nm and 700 nm, the width of the spaces between the metal wires is between 100 nm and 400 nm, and/ or the profile depth of the metal wires is between 10 nm and 500 nm.

8. The security element according to at least one of claims 1 to 7, **characterized in that** the metallic wire lattices are embedded in a dielectric.

9. The security element according to claim 8, **characterized in that** the metallic wire lattices are embedded between a dielectric substrate and a dielectric superstrate, the refractive indices of the substrate and the superstrate in the visible spectral range differing by less than 0.1.

10. A method for manufacturing a security element according to one of claims 1 to 9, having a multi-colored image that is visible in unpolarized light and that consists of a plurality of pixel elements, in which
- pixel elements having metallic wire lattices are produced that, when looked through and/ or in top view, produce a color impression that is associated with the pixel element,
- the metallic wire lattices being formed from a plurality of parallel metal wires that are arranged spaced apart and that have a lattice period of less than 1 µm and that exhibit a z-shaped metal profile having spaced-apart metallic sections on three different height levels, a middle height level extending in each case between a lower and an upper height level, and the metallic sections on each height level being produced having a width that is less than the respective width of the spaces between the metallic sections.

11. The method according to claim 10. **characterized in that**
- on the basis of a specified multi-colored image, a laterally varying lattice profile is established that, when viewed in top view and/ or when looked through, produces the specified multi-colored image,
- on a substrate, a lattice pattern having a laterally constant lattice period and laterally constant trench depth is produced,
- the trenches of the lattice pattern are filled with photoresist,
- the trenches filled with photoresist are exposed laterally with different intensities in accordance with the established lattice profile, and
- the exposed photoresist is removed to reveal the trenches of the lattice pattern in accordance with the exposure intensity and to obtain a relief pattern having a laterally varying lattice profile.

12. The method according to claim 10 or 11, **characterized in that**, on a relief pattern produced according to claim 11 or on an embossed relief pattern in the form of a laterally varying lattice profile that, when viewed in top view and/ or when looked through, produces the specified multi-colored image, a metalization is applied, especially vapor deposited.

13. The method according to claim 12, **characterized in that** the metalization is vapor deposited at a vapor deposition angle Q that, with respect to the surface normal, is between 0° and 75°, preferably between 5° and 45°.

14. The method according to claim 12 or 13, **characterized in that** the metalized relief pattern is covered with a lacquer layer.

15. The method according to at least one of claims 11 to 14, **characterized in that** the photoresist is exposed with a laser beam to achieve a spatial resolution in the micrometer range.

16. A data carrier having a security element according to one of claims 1 to 9, or having a security element manufacturable according to one of claims 10 to 15.

17. The data carrier according to claim 16, **characterized in that** the data carrier is a value document, especially a banknote.

18. The data carrier according to claim 17, **characterized in that** the data carrier is a value document having a polymer substrate, especially is a polymer banknote.

19. A method for checking the authenticity of a security element according to one of claims 1 to 9 having a multi-colored image that is visible in unpolarized light, in which the security element is viewed in unpolarized light and in linearly polarized light and, in each case, the color impression of the multi-colored image is detected, and in which a different color impression in unpolarized light and in linearly polarized light is considered to be a sign of the authenticity of the security element.

20. A method for checking the authenticity of a security element according to one of claims 1 to 9 having a multi-colored image that is visible in unpolarized light, in which the security element is viewed, in succession, in linearly polarized light of a first polarization direction and of a second polarization direction that is perpendicular to the first polarization direction and, in each case, the color impression of the multi-colored image is detected, and in which a different color impression in the two polarization directions is considered to be a sign of the authenticity of the security element.

## Revendications

1. Elément de sécurité pour des papiers de sécurité, des documents de valeur et similaires, avec une image multicolore visible en lumière non polarisée, qui se compose d'une pluralité d'éléments de pixels, **caractérisé en ce que**
- les éléments de pixels contiennent respectivement des réseaux de fils métalliques lesquels génèrent, en vue par transparence et/ou par réflexion, une perception de couleur associée à l'élément de pixel, moyennant quoi
- les réseaux de fils métalliques sont formés par une pluralité de fils métalliques parallèles disposés de manière espacée avec une période de réseau de moins de 1 µm, lesquels présentent un profil métallique en forme de z avec des sections métalliques espacées sur trois niveaux en hauteur différents, un niveau en hauteur moyen s'étendant respectivement entre un niveau en hauteur inférieur et un niveau en hauteur supérieur, et la largeur des sections métalliques sur chaque niveau en hauteur étant inférieure à la largeur respective des espaces intermédiaires entre les sections métalliques.

2. Elément de sécurité selon la revendication 1, **caractérisé en ce que** le profil de réseau des réseaux de fils métalliques est constant à l'intérieur de chaque élément de pixel.

3. Elément de sécurité selon la revendication 1, **caractérisé en ce que** chaque élément de pixel se compose de plusieurs sous-zones qui contiennent respectivement, dans une part de surface déterminée, un réseau de fils métalliques avec un profil de réseau constant lequel génère, en vue par transparence et/ou par réflexion, une couleur de base associée à la sous-zone, et **en ce que** la perception de couleur de chaque élément de pixel est générée par mélange de couleurs des couleurs de base des sous-zones.

4. Elément de sécurité selon la revendication 3, **caractérisé en ce que** l'on prévoit une quantité n de couleurs de base, lesquelles sont respectivement associées à une sous-zone de chaque élément de pixel, moyennant quoi n est de préférence de deux, trois ou quatre.

5. Elément de sécurité selon les revendications 3 ou 4, **caractérisé en ce que** les sous-zones contiennent des réseaux de fils métalliques avec la même période de réseau.

6. Elément de sécurité selon l'une au moins des revendications 3 à 5, **caractérisé en ce que** les sous-zones contiennent des réseaux de fils métalliques avec différentes profondeurs de profil.

7. Elément de sécurité selon l'une au moins des revendications 1 à 6, **caractérisé en ce que** la période de réseau du réseau de fils métalliques est comprise entre 200 nm et 700 nm, la largeur des espaces intermédiaires entre les fils métalliques étant comprise entre 100 nm et 400 nm et/ou la profondeur de profil des fils métalliques étant comprise entre 10 nm et 500 nm.

8. Elément de sécurité selon l'une au moins des revendications 1 à 7, **caractérisé en ce que** les réseaux de fils métalliques sont intégrés dans un diélectrique.

9. Elément de sécurité selon la revendication 8, **caractérisé en ce que** les réseaux de fils métalliques sont intégrés entre un substrat diélectrique et un superstrat diélectrique, moyennant quoi les indices de réfraction du substrat et du superstrat dans la plage spectrale visible divergent de l'ordre de moins de 0,1.

10. Procédé pour la fabrication d'un élément de sécurité selon l'une des revendications 1 à 9, avec une image multicolore visible en lumière non polarisée, qui se compose d'une pluralité d'éléments de pixels, dans lequel
- des éléments de pixels avec des réseaux de fils métalliques sont générés, lesquels génèrent, en vue par transparence et/ou par réflexion, une perception de couleur associée à l'élément de pixel, moyennant quoi
- les réseaux de fils métalliques sont formés par une pluralité de fils métalliques parallèles disposés de manière espacée avec une période de réseau de moins de 1 µm, lesquels présentent un profil métallique en forme de z avec des sections métalliques espacées sur trois niveaux en hauteur différents, un niveau en hauteur moyen s'étendant respectivement entre un niveau en hauteur inférieur et un niveau en hauteur supérieur, et les sections métalliques sur chaque niveau en hauteur étant générées avec une largeur qui est inférieure à la largeur respective des espaces intermédiaires entre les sections métalliques.

11. Procédé selon la revendication 10, **caractérisé en ce que**
- sur la base d'une image multicolore prescrite, on détermine un profil de réseau variant latéralement, lequel génère, lors de l'observation par transparence et/ou par réflexion, l'image multicolore prescrite,
- une structure de réseau avec période de réseau latérale constante et profondeur de fouille latérale constante étant générée sur un substrat,
- les fouilles de la structure de réseau étant remplies avec un vernis photosensible,
- les fouilles remplies avec du vernis photosensible étant soumises à une exposition lumineuse, conformément au profil de réseau déterminé, latéralement, avec une intensité différente, et
- le vernis photosensible exposé étant enlevé afin de dégager les fouilles de la structure de réseau conformément à l'intensité de l'exposition lumineuse et obtenir une structure en relief ave un profil de réseau variant latéralement.

12. Procédé selon les revendications 10 ou 11, **caractérisé en ce que**, sur une structure en relief générée selon la revendication 11 ou sur une structure en relief estampée sous la forme d'un profil de réseau variant latéralement, qui génère l'image multicolore prescrite lors de l'observation par transparence et/ou par réflexion, un revêtement métallique est appliqué, en particulier métallisé sous vide dessus.

13. Procédé selon la revendication 12, **caractérisé en ce que** le revêtement métallique est métallisé sous vide selon un angle de métallisation Q lequel, compte tenu de la normale à la surface, est compris entre 0° et 75°, de préférence entre 5° et 45°.

14. Procédé selon les revendications 12 ou 13, **caractérisé en ce que** la structure en relief métallisée est recouverte par une couche de vernis.

15. Procédé selon l'une au moins des revendications 11 à 14, **caractérisé en ce que** le vernis photosensible est soumis à une exposition lumineuse avec un faisceau laser afin d'obtenir une résolution spatiale dans la plage des micromètres.

16. Support de données avec un élément de sécurité selon l'une des revendications 1 à 9, ou bien avec un élément de sécurité pouvant être fabriqué selon l'une des revendications 10 à 15.

17. Support de données selon la revendication 16, **caractérisé en ce que** le support de données est un document de valeur, en particulier un billet de banque.

18. Support de données selon la revendication 17, **caractérisé en ce que** le support de données est un document de valeur avec un substrat polymère, en particulier un billet de banque polymère.

19. Procédé pour le contrôle de l'authenticité d'un élément de sécurité selon l'une des revendications 1 à 9 avec une image multicolore visible en lumière non polarisée, dans lequel l'élément de sécurité est observé à la lumière non polarisée et à la lumière polarisée linéairement et la perception de couleur de l'image multicolore étant respectivement détectée, et dans lequel une perception de couleur différente à la lumière non polarisée et à la lumière polarisée linéairement est considérée comme étant un signe de l'authenticité de l'élément de sécurité.

20. Procédé pour le contrôle de l'authenticité d'un élément de sécurité selon l'une des revendications 1 à 9 avec une image multicolore visible en lumière non polarisée, dans lequel on observe successivement l'élément de sécurité à la lumière polarisée linéairement d'une première direction de polarisation et d'une deuxième direction de polarisation perpendiculaire à la première direction de polarisation, et la perception de couleur respective de l'image multicolore étant détectée, et dans lequel une perception de couleur différente pour les deux directions de polarisation est considérée comme étant un signe de l'authenticité de l'élément de sécurité.
